# EUROPÄISCHE PATENTSCHRIFT

(11) **EP 0 537 424 B1**
(45) Veröffentlichungstag und Bekanntmachung des Hinweises auf die Patenterteilung: **30.11.1994**
(21) Anmeldenummer: 92112628.0
(22) Anmeldetag: 23.07.1992
(51) Int. Cl.: F24D 19/10, F16K 11/085, F16K 11/052

(54) **Mehrwegemischventil**
Multiple way mixing valve
Vanne mélangeuse à plusieures voies

(30) Priorität: 13.09.1991 DE 4130479
(43) Veröffentlichungstag der Anmeldung: 21.04.1993
(73) Patentinhaber: Viessmann, Hans, Dr., 35088 Battenberg/Eder (DE)
(72) Erfinder: Viessmann, Hans, Dr., 35088 Battenberg/Eder (DE)
(74) Vertreter: Wolf, Günter, Dipl.-Ing.

(56) Entgegenhaltungen:
- CH-A- 362 279
- DE-B- 1 024 299
- DE-B- 1 144 068
- DE-B- 1 255 424
- DE-U- 7 128 525
- US-A- 4 566 628

## Beschreibung

Die Erfindung betrifft ein Mehrwegemischventil für Heizungsanlagen gemäß Oberbegriff des Patentanspruches 1.

Derartige Mehrwegemischventile sind bspw. nach der DE-B-1 255 424 bekannt. Die DE-B-1 024 299, DE-B-1 144 068 und DE-U-7 128 525 bilden den technologischen Hintergrund. Mischventile in Schalenbauweise gemäß der DE-B-1 255 424 haben sich aufgrund ihrer Schalenbauweise, insbesondere hinsichtlich ihrer relativ geringen Fertigungsaufwandes als besonders vorteilhaft erwiesen, verlangen aber die Verwendung eines Verschlußdeckels aus korrosionsfestem Material (in der Regel Messing bzw. Bronze), um der Korrosionsgefahr zwischen Drehschieber und Deckel zu begegnen, und außerdem können die Schalen nicht formidentisch ausgebildet werden. Um überhaupt einen Innenraum für den Drehschieber zu bilden, in dem je nach Stellung des Drehschiebers das zu- und abströmende Wasser in gewünschter Richtung geleitet wird, ist es erforderlich, im Querschnitt v-förmige Trennwände einzuschweißen, an deren zu bearbeitenden Längskanten der Drehschieber bei Drehung vorbeistreicht.

Ausgehend von einem Mischventil nach der DE-B-1 255 424 liegt der Erfindung die Aufgabe zugrunde, ein Mehrwegemischventil der gattungsgemäßen Art dahingehend zu verbessern, daß der Fertigungsaufwand weiter reduziert und für die Deckel und die Schalen formidentische Teile verwendet werden können, verbunden mit der Maßgabe, daß für das eigentliche Mischergehäuse und dessen Deckel normales Material verwendbar sein soll.

Diese Aufgabe ist mit einem Mehrwegemischventil der eingangs genannten Art nach derErfindung durch die im Hauptanspruch angeführten Merkmale gelöst. Vorteilhafte Weiterbildungen ergeben sich nach den Unteransprüchen.

Diese erfindungsgemäße Ausbildung des Mehrwegemischventils hat folgende Vorteile:
Die bewährte Schalenbauweise ist beibehalten, wobei aber nun die Schalen formidentisch ausgebildet sind, also mit dem gleichen Preßwerkzeug hergestellt werden können. Es wird zwar ein zweiter Deckel benötigt, der aber nur geringfügig im Zentrumsbereich von der Form des anderen Deckels abweicht, also auch im ersten Schritt mit dem gleichen Preßwerkzeug hergestellt werden kann, was noch näher erläutert wird. Ganz wesentlich ist dabei, daß diese Deckel wie auch die Schalen, da sie den Drehschieberinnenraum nicht mehr direkt begrenzen, also nicht mehr mit dem Drehschieber in Berührung stehen, aus normalem Stahlblech gebildet werden können. Die Verwendung von relativ teurem, korrosionsfestem Material, nämlich vorzugsweise Edelstahl, beschränkt sich auf die Hülse und die beiden Verschlußscheiben, die lediglich lose in der Hülse beidseitig zum Drehschieber eingesetzt werden. Durch die eingesetzte Hülse können die Zu- und Abströmöffnungen mit großen Querschnitten bemessen werden, wodurch sich ein insgesamt verbessertes Regelverhalten des Mischventils ergibt. Da die Hülse und die dünnen Verschlußscheiben die einzigen mit dem Drehschieber in Direktkontakt stehenden Teile sind, lassen sich infolgedessen die erforderlichen Trennwände denkbar einfach gestalten und im Gehäuse fixieren.

Vorteilhafte Ausgestaltungen bestehen in folgendem:
Die Deckel sind konzentrisch zur Mischerachse mit im Querschnitt u-förmigen, in den Hülsenquerschnitt einragenden Ringprägungen versehen , wobei der stellhebelseitige Deckel eine Durchgriffsöffnung für die Drehschieberwelle aufweist. Dadurch werden besondere Andruckringe für die Dichtungsringe entbehrlich.

Ferner ist vorgesehen, daß die Deckel mit einer gegen das Gehäuse gerichteten Umfangsrandabkröpfung versehenen und diese auf Wandausprägungen der beiden das Gehäuse bildenden Schalen abgestützt sind. Dadurch ergibt sich ein guter Spanneffekt für beide Deckel, außerdem ist damit der Höhe der überragenden Hülsenränder auf einfache Weise Rechnung getragen, und sowohl die abgekröpften Umfangsränder der Deckel als auch die Wandausprägungen an den beiden Schalen lassen sich gleichzeitig bei deren Preßherstellung mit ausbilden.

Für eine ebenso einfache wie zweckmäßige Abdichtung der Drehschieberwelle, und zwar unter Mitausnutzung der bevorzugten Preßverformung, kann das Mischventil derart ausgebildet sein, daß zwischen dem die Durchgriffsöffnung bildenden inneren Ringsteg des Deckels und der Drehschieberwelle ein Dichtungsring angeordnet und dieser mit einer mit dem Deckel festspannbaren Deckscheibe eingeschlossen ist, oder noch einfacher, daß zwischen dem die Durchgriffsöffnung bildenden inneren Ringsteg des Deckels und der Drehschieberwelle ein Dichtungsring angeordnet und der Ringsteg mit einer radial gegen die Drehschieberwelle gerichteten Ringabkröpfung versehen ist.

Das erfindungsgemäße Mehrwegemischventil wird nachfolgend anhand der zeichnerischen Darstellung von Ausführungsbeispielen näher erläutert.

Es zeigt
- Fig. 1: einen Schnitt durch das Mehrwegemischventil längs Linie I-I in Fig. 2;
- Fig. 2: eine Draufsicht auf das Mehrwegemischventil;
- Fig. 3, 4: vergrößert und im Teilschnitt weitere Ausführungsformen;
- Fig. 5: einen Schnitt durch den unteren Deckel und
- Fig. 6: im Schnitt eine besondere Ausführungsform der Schalen- und Hülsenverbindung.

Das Mehrwegemischventil besteht aus einem aus zwei Schalen 2, 2' gebildeten Gehäuse 1 mit im gezeigten Ausführungsbeispiel vier Anschlußstutzen 3 und einem im Gehäuse 1 zwischen Zu- und Abströmöffnungen 5' begrenzenden Trennwänden 6 verstellbaren Drehschieber 4 aus korrosionsfestem Material, der zwischen Verschlußscheiben aus ebenfalls korrosionsfestem Material angeordnet ist.

Für ein solches Mehrwegemischventil ist nun wesentlich, daß die Zu- und Abströmöffnungen 5' in einer Hülse 5 aus korrosionsfestem Material und in dieser beidseitig zum Drehschieber 4 Verschlußscheiben 7 aus ebenfalls korrosionsfestem Material angeordnet sind, wobei die Hülse 5 mit ihren Endrändern 5'' oder diese verlängernden Öffnungsrändern 21'' der Schalen 2, 2' (siehe Fig. 6) die Verschlußscheiben 7 überragt und zwischen den Verschlußscheiben 7 und den beidseitig am Gehäuse 1 verspannbaren, im wesentlichen ebenfalls formidentischen Deckeln 8, 8' in den von Hülse 5, Verschlußscheiben 7 und Deckeln 8, 8' gebildeten Zwickeln 9 jeweils ein Dichtungsring 10 verspannt angeordnet ist.

Die beiden Schalen 2, 2' sind dabei wie auch beim gattungsgemäßen Mischventil längs der Mittelebene E des Gehäuses 1 miteinander verschweißt. Die beiden Verschlußscheiben 7 bestehen aus korrosionsfestem Material, vorzugsweise dünnem Edelstahlblech.

Wie ersichtlich, sind die beiden Schalen 2, 2' formidentisch und bis auf den Zentrumsbereich auch die beiden durch Pressen ausgeformten Deckel 8, 8', die konzentrisch zur Mischerachse 11 mit im Querschnitt u-förmigen, in den Hülsenquerschnitt einragenden Ringprägungen 12 versehen sind, wobei der stellhebelseitige Deckel 8 eine Durchgriffsöffnung 13 für die Drehschieberwelle 4' aufweist, an der außerhalb des Gehäuses 1 der Stellhebel 4'' sitzt. Die Deckel 8, 8' sind ferner mit einer gegen das Gehäuse 1 gerichteten Umfangsrandabkröpfung 14 versehen, die sich auf Wandausprägungen 15 der beiden das Gehäuse 1 bildenden Schalen 2, 2' abstützen.

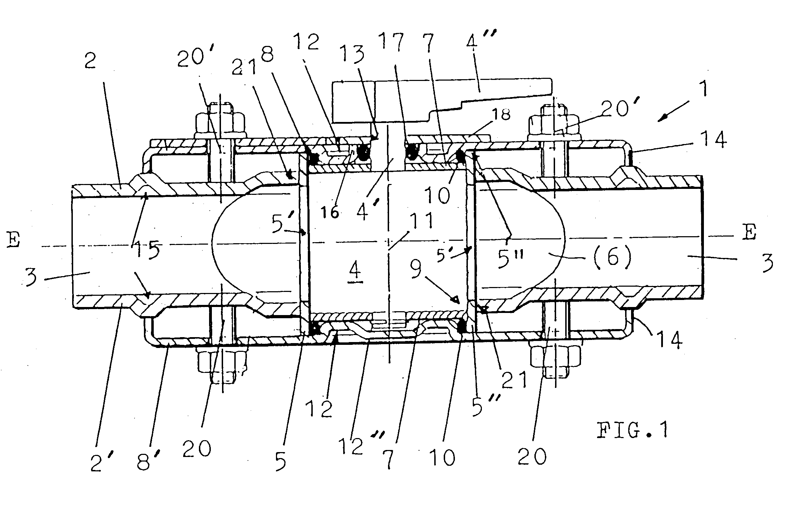

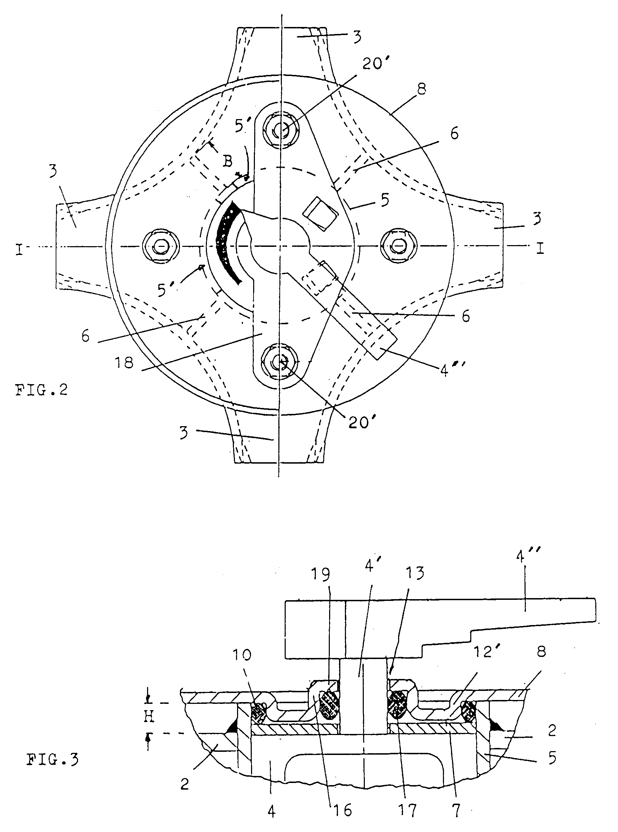

Beim Ausführungsbeispiel gemäß Fig. 1, 2 ist zwischen dem die Durchgriffsöffnung 13 bildenden inneren Ringsteg 16 des Deckels 8 und der Drehschieberwelle 4' ein Dichtungsring 17 angeordnet, der mit einer mit dem Deckel 8 festspannbaren Deckscheibe 18 eingeschlossen ist. Bei diesem Ausführungsbeispiel (Fig. 1 bis 3) durchgreift die Hülse 5 die Schalen 2, 2' und ragt über diese hinaus.

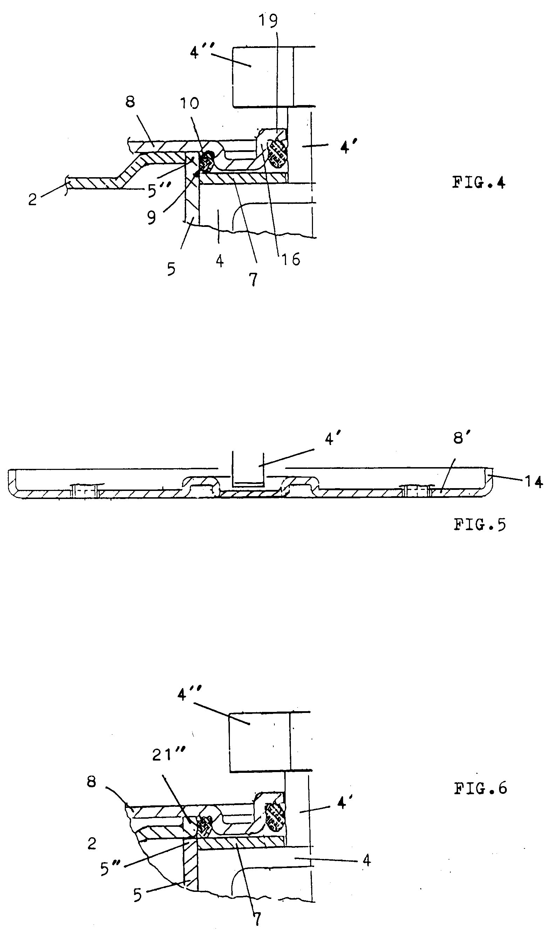

Für die Fixierung der beiden entsprechend gelochten Deckel 8, 8' sind (in Verteilung gemäß Fig. 2) Stehbolzen 20 an den Schalen 2, 2' angeordnet, wobei die beiden Stehbolzen 20' auch zur Mitfestlegung der Deckscheibe 18 dienen. Die Festlegung des Dichtungsringes 17 kann aber auch im Sinne der Fig. 3 erfolgen, gemäß der der Ringsteg 16 des oberen Deckels 8 mit einer radial gegen die Drehschieberwelle 4' gerichteten Ringabkröpfung 19 versehen ist.

Da die beiden Deckel 8, 8', wie erwähnt und ersichtlich, bis auf ihre Zentrumsbereiche formidentisch sind, können beide Deckel ohne weiteres mit dem gleichen Press- bzw. Ziehwerkzeug ausgeformt werden, wobei bereits die äußere Abkröpfung 14 an beiden Deckeln mit angeformt werden kann. Danach ist lediglich der obere Deckel 8 nur noch im Sinne der Fig. 1 oder 3 zu verformen, während der andere Deckel 8' eine zentrische Ausprägung 12'' erhält, die als untere Führung bzw. Aufnahme des unteren Endes der Drehschieberwelle 4' dient. Es ist aber auch gemäß Fig. 5 möglich, den Deckel 8' genauso wie den Deckel 8 gemäß Fig. 3 auszubilden, wobei lediglich keine Durchgriffsöffnung für die Drehschieberwelle 4' an diesem Deckel 8' anzubringen ist.

Da die Trennwände 6 nicht mehr in Kontakt mit dem Drehschieber 4 stehen, sondern nur mit der stationären Hülse 5 und den beiden Schalen 2, 2', reicht es vorteilhaft aus, diese mit einem geeigneten Metallkleber in das Gehäuse 1 einzubinden. Im übrigen stünde diesbezüglich nichts entgegen, zumal dies mit keinem zusätzlichen Arbeitsgang verbunden wäre, an den betreffenden Anordnungsstellen der Trennwände 6 an den Schalen 2, 2' stellungsorientierende Vorprägungen beim Pressen der Schale mit vorzusehen. Die Trennwände 6 haben dabei eine Zuschnittsform, wie aus Fig. 1 ersichtlich, wobei die Trennwände 6 jedoch um 45° in die Zeichnungsebene gerückt und insoweit bezüglich ihrer Breite B etwas zu groß dargestellt sind.

Um den Durchströmraum innerhalb der Hülse 5 in der Höhe nicht zu reduzieren, was wesentlich ist, ragen die Enden der Hülse 5 über die Schalen 2, 2' heraus, wobei die Höhe H der herausragenden Enden der Stärke einer Verschlußscheibe 7 und der Stärke eines Dichtungsrings 10 im zusammengepreßten Zustand entspricht. In Äquivalenz dazu könnten aber auch die Schalen 2, 2' um die Hülse 5 herum stärker ausgewölbt sein und direkt an den Rändern der Hülse 5'' angesetzt sein (siehe Fig. 4).

Außerdem ist es gemäß Fig. 6 möglich, die herausragenden Ränder 5'' durch aufgekröpfte Öffnungsränder 21'' der Schalen 2, 2' zu bilden. In diesem Falle sitzen die Verschlußscheiben 7 gerade noch in der Hülse 5 und schließen bündig mit den Endrändern 5'' der Hülse 5 ab.

## Patentansprüche

1. Mehrwegemischventil für Heizunganlagen, bestehend aus einem aus zwei Schalen (2, 2') gebildeten und zentrisch abgedeckeltem Gehäuse (1) mit mindestens drei Anschlußstutzen (3) und einem im Gehäuse (1) zwischen Zu- und Abströmöffnungen (5') begrenzenden Trennwänden (6) verstellbaren Drehschieber (4) aus korrosionsfestem Material, der zwischen Verschlußscheiben aus ebenfalls korrosionsfestem Material angeordnet ist,
**dadurch gekennzeichnet,**
daß die Zu- und Abströmöffnungen (5') in einer Hülse (5) aus korrosionsfestem Material und in dieser beidseitig zum Drehschieber (4) Verschlußscheiben (7) aus ebenfalls korrosionsfestem Material angeordnet sind, wobei die Hülse (5) mit ihren Endrändern (5'') oder diese verlängernden Öffnungsrändern (21'') der Schalen (2, 2') die Verschlußscheiben (7) überragen und zwischen den Verschlußscheiben (7) und den beidseitig am Gehäuse (1) verspannbaren, im wesentlichen ebenfalls formidentischen Deckeln (8, 8') in den von Hülse (5), Verschlußscheiben (7) und Deckeln (8, 8') gebildeten Zwickeln (9) jeweils ein Dichtungsring (10) verspannt angeordnet ist.

2. Mischventil nach Anspruch 1,
**dadurch gekennzeichnet,**
daß die Deckel (8, 8') konzentrisch zur Mischerachse (11) mit im Querschnitt u-förmigen, in den Hülsenquerschnitt einragenden Ringprägungen (12) versehen sind, wobei der stellhebelseitige Deckel (8) eine Durchgriffsöffnung (13) für die Drehschieberwelle (4') aufweist.

3. Mischventil nach Anspruch 1 oder 2,
**dadurch gekennzeichnet,**
daß die Deckel (8, 8') mit einer gegen das Gehäuse (1) gerichteten Umfangsrandabkröpfung (14) versehen und diese auf Wandausprägungen (15) der beiden das Gehäuse (1) bildenden Schalen (2, 2') abgestützt sind.

4. Mischventil nach Anspruch 2,
**dadurch gekennzeichnet,**
daß zwischen einem die Durchgriffsöffnung (13) bildenden inneren Ringsteg (16) des Deckels (8) und der Drehschieberwelle (4') ein Dichtungsring (17) angeordnet und dieser mit einer mit dem Deckel (8) festspannbaren Deckscheibe (18) eingeschlossen ist.

5. Mischventil nach Anspruch 2,
**dadurch gekennzeichnet,**
daß zwischen dem die Durchgriffsöffnung (13) bildenden inneren Ringsteg (16) des Deckels (8) und der Drehschieberwelle (4') ein Dichtungsring (17) angeordnet und der Ringsteg (16) mit einer radial gegen die Drehschieberwelle (4') gerichteten Ringabkröpfung (19) versehen ist.

6. Mischventil nach einem der Ansprüche 1 bis 5,
**dadurch gekennzeichnet,**
daß die beiden Deckel (8, 8') als Preßformteile ausgebildet sind.

7. Mischventil nach einem der Ansprüche 1 bis 6,
**dadurch gekennzeichnet,**
daß die Trennwände (6) mit Metallkleber im Gehäuse (1) zwischen der Hülse (5) und den Anschlußstutzen (3) fixiert sind.

8. Mischventil nach einem der Ansprüche 1 bis 7,
**dadurch gekennzeichnet,**
daß die Höhe (H) der herausragenden Teile der Hülse (5) der Stärke einer Verschlußscheibe (7) und der Stärke des Dichtungsringes (10) im zusammengepreßten Zustand entspricht.

9. Mischventil nach einem der Ansprüche 1 bis 7,
**dadurch gekennzeichnet,**
daß die beiden Schalen (2, 2') um die Hülse (5) herum um eine Höhe (H) ausgewölbt sind, die der Stärke einer Verschlußscheibe (7) und der Stärke des Dichtungsringes (10) im zusammengepreßten Zustand entspricht, wobei die Schalenränder (21') bündig an den Rändern (5'') der Hülse (5) angesetzt sind (Fig. 4).

## Claims

1. A multi-way mixing valve for heating systems comprising a casing (1) formed of two cups (2,2') and being centrally lid-covered, having at least three nozzles (3) and a rotary slide valve (4) of corrosion-resistant material adjustable within the casing (1) and confining partitions (6) between in-flow and off-flow openings (6), with the rotatary slide valve being located between closure plates also made of corrosion-resistant material,
characterized in
that the in-flow and off-flow openings (5') are provided within a sleeve (5) of corrosion-resistant material, with closure plates (7) also of corrosion-resistant material being loacted within the said sleeve on both sides of the rotary slide valve (4), wherein the sleeve (5) with the marginal edges (5'') thereof or with opening edges (21'') of the cups (2,2') extending the said marginal edges protrude beyond the closure plates (7), and wherein respectively one sealing ring (10) is clamped between the closure plates (7) and the lids (8,8') of a substantially identical shape capable of being clamped on both sides of casing (1) within the spandrels (9) formed by sleeve (5), closure plates (7) and lids (8,8').

2. A mixing valve according to claim 1,
characterized in
that the lids (8,8') concentrically to the mixer axis (11) are provided with annular embossings (12) of U-shaped cross-section protruding into the sleeve cross-section, with the lid (8) on the adjustable lever side being provided with a passage opening (13) for the rotary slide shaft (4').

3. A mixing valve according to claims 1 or 2,
characterized in
that the lids (8,8') are provided with a peripheral marginal shoulder (14) directed toward the casing (1), and that the said shoulder is supported on the wall embossings (15) of the two cups (2,2') forming the casing (1).

4. A mixing valve according to claim 2,
characterized in
that a sealing ring (17) is provided between an inner annular web (16) of lid (8) forming the passage opening (13), and the rotary valve shaft (4'), and that the said annular ring is enclosed by a cover plate (18) clampable to the lid (8).

5. A mixing valve according to claim 2,
characterized in
that a sealing ring (17) is provided between the inner annular web (16) of the lid (8) forming the passage opening (13), and the rotary slide shaft, and that the annular web (16) is provided with an annular shoulder (19) radially directed toward the rotary slide shaft (4').

6. A mixing valve according to any one of claims 1 to 5,
characterized in
that the two lids (8,8') are formed as die-cast parts.

7. A mixing valve according to any one of claims 1 to 6,
characterized in
that the partitions (6) are fixed by metal adhesive within casing (1) between the sleeve (5) and the nozzles (3).

8. A mixing valve according to any one of claims 1 to 7,
characterized in
that the height (H) of the protruding parts of the sleeve (5) corresponds to the strength of a closure plate (7) and to the strength of the sealing ring (10) in compressed condition.

9. A mixing valve according to any one of claim 1 to 7,
characterized in
that the two cups (2,2') around the sleeve (5) are bulged out by a height (H) corresponding to the strength of a closure plate (7) and to the strength of the sealing ring (10) in compressed condition, with the cup edges (21') being snugly mounted on the edges (5'') of the sleeve (5). (Fig. 4).

## Revendications

1. Vanne de mélange à plusieurs voies pour installation de chauffage, composée d'un boîtier (1) formé par deux coquilles (2, 2') et recouvert par un couvercle central avec au moins trois raccords de branchement (3) et avec un tiroir rotatif réglable (4) dans le boîtier (1) entre des parois de séparation (6) délimitant les ouvertures d'arrivée et de départ (5'), en matière résistant à la corrosion, qui est disposé entre des plaquettes de fermeture également en matière résistant à la corrosion,
caractérisée en ce que,
les ouvertures d'entrée et de sortie (5') sont disposées dans une douille (5) en matière résistant à la corrosion et en ce que, faisant face des deux côtés dans celle-ci au tiroir rotatif (4), des plaquettes de fermeture (7) également en matière résistant à la corrosion sont disposées, en ce que la douille (5), avec ses bords d'extrémité (5'') ou avec les bords d'ouverture (21'') des coquilles (2,2'), qui les prolongent, dépassent les plaquettes de fermeture (7) et en ce que ,entre les plaquettes de fermeture (7) et les couvercles (8, 8') déformables, globalement également de forme identique, des deux côtés du boîtier (1), dans les goussets (9) formés par la douille (5), les plaquettes de fermeture (7) et les couvercles (8, 8'), un anneau d' étanchéité (10) est disposé chaque fois sous tension.

2. Vanne de mélange selon la revendication 1,
caractérisée en ce que les couvercles (8, 8') sont munis d'estampages annulaires (12), pénétrant dans la section de la douille, de façon concentrique par rapport à l'axe du mélangeur (11) et avec une section transversale en forme de u, ce par quoi le couvercle (8), du côté du levier de manoeuvre, présente une ouverture de pénétration (13) pour l'arbre du tiroir rotatif (4').

3. Vanne de mélange selon la revendication 1 ou 2,
caractérisée en ce que,
les couvercles (8, 8') sont munis d'un pliage périphérique de bordure (14) tourné vers le boîtier et qui est appuyé sur l'estampage de paroi (15) des deux coquilles (2, 2') formant le boîtier (1).

4. Vanne de mélange selon la revendication 2,
caractérisée en ce que,
un anneau d'étanchéité (17) est disposé entre une traverse annulaire intérieure (16) du couvercle (8) formant l'ouverture de pénétration (13) et l'arbre du tiroir rotatif (4') et en ce que celui-ci est logé avec une rondelle de couverture (18) pouvant être mise sous tension avec le couvercle (8).

5. Vanne de mélange selon la revendication 2,
caractérisée en ce que,
un anneau d'étanchéité (17) est disposé entre la traverse annulaire intérieure (16) du couvercle (8) formant l'ouverture de pénétration (13) et l'arbre du tiroir rotatif (4') et en ce que la traverse annulaire (16) est munie d'un pliage annulaire (19) dirigé radialement vers l'arbre du tiroir rotatif (4').

6. Vanne de mélange selon l'une des revendications 1 à 5,
caractérisée en ce que,
les deux couvercles (8, 8') sont réalisés en pièces de forme matricée.

7. Vanne de mélange selon l'une des revendications 1 à 6,
caractérisée en ce que,
les parois de séparation (6) sont fixées dans le boîtier (1) entre la douille (5) et les raccords de branchement (3) par de la colle pour métaux.

8. Vanne de mélange selon l'une des revendications 1 à 7,
caractérisée en ce que,
la hauteur (H) des parties de la douille (5) qui dépassent correspond à l'épaisseur d'une plaquette de fermeture (7) et à l'épaisseur de l'anneau d'étanchéité (10) dans leur état comprimé.

9. Vanne de mélange selon l'une des revendications 1 à 7,
caractérisée en ce que,
les deux coquilles (2, 2') sont creusées autour de la douille (5) d'une hauteur (H), qui correspond à l'épaisseur d'une plaquette de fermeture (7) et à l'épaisseur de l'anneau d'étanchéité (10) dans leur état comprimé, ce par quoi les bords de coquille (21') sont disposés de façon jointive sur les bords (5'') de la douille (5) (Figure 4).
